# EUROPEAN PATENT APPLICATION

(11) **EP 3 355 426 A1**
(43) Date of publication of application: **01.08.2018**
(21) Application number: 17382042.4
(22) Date of filing: 31.01.2017
(51) Int. Cl.: H02G 3/08, H02G 15/013, H02B 1/30, H02G 3/06, H01R 13/52

(54) **TUBULAR INSULATING SEAL AND CORRESPONDING INSULATING ARRANGEMENT**

(71) Applicant: Ridelin, S.L., 08240 Manresa (Barcelona) (ES)
(72) Inventor: RIERA CAPELLES, Joaquín, 08240 Manresa (ES)
(74) Representative: Curell Suñol S.L.P.

(57) **Abstract**

A tubular insulating seal (1) and corresponding insulating arrangement. The seal (1) allows the connection end of electric conductor cables (102) of different cross sections to be insulated. It extends along a longitudinal direction (L). The seal is characterized in that it comprises a plurality of insulating bodies (6) in series in order according to increasing cable (102) cross sections in the direction of insertion of the cable and having an insulating portion (10) for at least one cable (102) cross section. Each of the insulating portions (10) is a tube of elastically deformable material extending internally in the cable insertion direction. Between adjacent insulating bodies (6) there are provided cutting portions (8) for separating the insulating bodies (6) for the insulated mounting of the cable (102) from the insulating bodies for cable (102) cross sections smaller than the cross section of the cable (102) to be mounted in the seal (1).

## Description

### Field of the invention

The invention is in the field of insulation of electric conductor cables against moisture and dust as happens, for example, albeit no exclusively, in underground distribution networks.

Particularly, the invention relates to a tubular insulating seal for insulating the connection end of electric conductor cables of different cross sections, said seal extending along a longitudinal direction between a first insertion end and a second exit end for said cable, by which said seal can be mounted on a receiving surface.

The invention also relates to an insulating arrangement for insulating at least one electric conductor cable, said arrangement comprising an insulating surface with at least one passage hole for the insertion of said cable.

### State of the art

It is known to insulate the free end of electric conductor cables mounted in splicing or terminal connectors, by way of insulating seals. The purpose of these seals is to prevent the ingress of moisture and dust in the point of connection of the cable in the connector. Furthermore, it also electrically insulates the end of the conductor and thereby guarantees safety of use.

Also known are insulating seals formed by a plurality of cylindrical insulating bodies, ordered from larger to smaller cable cross section, in stepped tower or pyramid fashion. These seals allow electric conductor cables of different cross sections to be insulated with a single seal. To this end, the insulating bodies of a cross section smaller than the cross section of the cable it is wanted to insulate must be cut away.

DE 102011054294 A1 discloses a seal for mounting cables of different cross sections. The seal is hollow on the inside and has a plurality of cylindrical insulating bodies forming a stepped tower or pyramid. The cross section of the cable that may be assembled is increasing from one end to the other of the seal, in the cable insertion direction. On the inside, the seal is a smooth cone. Each of the steps corresponds to a predetermined cable cross section. To mount a cable, the insulating bodies for cable cross sections smaller than the cross section of the cable it is wanted to mount must be cut away. Thus, when the seal is cut at the level of the cable insertion diameter of the corresponding insulating body, a sharp edge is formed between the outer cylinder wall and the inner cone, namely, at the point where the seal should insulate the cable. Thus, the cut directly affects the insulating portion. Consequently, if the cut made is not clean and flashing is formed or the cut is not perpendicular to the axis of the seal, the insulation of the seal is defective.

DE 102014114568 A1 shows a hollow seal having features similar to those of the foregoing paragraph. Nevertheless, in this case, the inner form of the cylindrical insulating bodies is substantially parallel to the outer form of each insulating body. On the other hand, on the outer perimeter of the lower base of each insulating body adjacent another insulating body, there is provided a cutting portion, as a wedge-like perimetric groove. As far as the inner profile is concerned, on the inner perimeter of the upper base of each insulating body adjacent another insulating body, there is formed a transitional chamfer connecting both inner profiles and coinciding with the end of the outer perimetric groove. In the portion formed between the groove and the inner chamfer, there is obtained an insulation portion for the cable once the seal has been cut. To mount the cable, there is selected the insulating body having the cross section appropriate for the cross section of the cable to be mounted and the insulating bodies of smaller cross section are cut away, at the level of the wedge-like groove. At the point where the end of the groove and the chamfer physically coincide, there is formed an insulation portion which is practically a sharp edge. Therefore, an incorrect cut may damage the seal or make it useless. Furthermore, the operation of cutting the seal is complicated, since when the unrequired insulating bodies are cut away across the cutting portion, it is easy to leave flashing on the inner chamfer or for the cut not to be perpendicular to the axis of the seal. Owing to this, the seal does not correctly bear against the perimeter of the cable and the insulation provided by the seal is also unreliable.

In the two seals described, there also appears the problem that when the cable is mounted through the smaller cross section end, by inserting it in the direction of the larger cross section end, the seal tends to fold inwardly over itself. To avoid this problem, the cable could be mounted from the other end, namely insert it through the larger cross section end and slide the seal along the whole length of the cable, until it reaches the free end to be connected. This resource is obviously only useful in the case of relatively short cables. When the cables laid are very long, this operation becomes very complex. Alternatively, there is the option of turning the seal inside out, as if it were a sock. Then the cable is mounted from the larger cross section side and when it comes out of the smaller cross section end, the seal is turned back the right way round to finalize the mounting. This manoeuvre is complicated, since if any point is misplaced when the seal is turned about, moisture could enter in the portion which should be insulated. In addition, to be able to turn the seal inside out, it must be elastic. To this end, reduced wall thicknesses must be used, which is also prejudicial for achieving a seal with a long-lasting service life. This is particularly desirable in the case of buried underground connections.

US 2006/148336 A1 discloses a waterproof connector for insulating different cable cross sections, wherein the diameter of the insulating portion decreases in the cable insertion direction. This configuration means that the connector has to be made of two different parts, since otherwise easy access may not be had to the insulating bodies to cut them. On the other hand, a further important disadvantage consists of the cut being made at the end of the connector which is hidden in the interior thereof. Thus, if for example, the cutting blade is moist, when the desired end is cut, the moisture accumulates at this point. Precisely, the point where the cut has been made remains mounted inside of the insulating arrangement. Thus, this type of connector requires the personnel who mounts it to be well trained, to avoid incorrect mountings which would cause the unwanted ingress of moisture at the point of connection.

### Summary of the invention

It is an object of the invention to provide a tubular insulating seal for insulating the ends of electric conductor cables of different cross sections of the type indicated at the beginning, allowing the cable to be mounted quickly and easily to insulate the connection end thereof. Furthermore, the seal must be versatile and provide a better insulation of the cable to be mounted than that provided by the known seals.

This object is achieved by an insulating seal of the type indicated at the beginning, characterized in that it comprises a plurality of insulating bodies, each of said insulating bodies comprising an insulating portion for at least one cable cross section, said insulating bodies being arranged one after the other, in order according to increasing cable cross sections in the direction from said first end to said second end, and each of said insulating portions being configured as a tube of elastically deformable material, extending internally through the corresponding insulating body, in the direction from said first end to said second end, and in that between adjacent insulating bodies there are provided cutting portions along which the insulating bodies for the insulated mounting of said cable must be separated from the insulating bodies for cable cross sections smaller than the cross section of the cable that is to be mounted in said seal.

The concept of insulation according to the invention relates not only to insulation from water and moisture, but also to insulation against dust, dirt, salts or to electrical insulation. It should also be mentioned that the seal of the invention is preferably, but not exclusively, applicable to connections of underground networks.

On the other hand, in the invention, a conductor cable relates to the ensemble formed by the electrical conductor and the corresponding insulating sheath covering said conductor.

Owing to the insulating portions having a tubular form extending internally through the insulating body as a member independent of the outer wall of the insulating body, there is avoided the formation of a sharp insulating edge, such as occurs with the seals of the state of the art. In addition, this confers elasticity on the insulating portion, thereby improving the contact and adaptation to the cable perimeter. The insulating portion is now a tube, such that the insulating portion can be separated from the cutting portion. In addition, this also allows the insulating portion to be extended as desired. This ensures that if the cutting of the seal is not perfectly perpendicular to the axis thereof or flashing or irregularities are formed in the cutting portion, the insulating portion is sufficiently long to offset these problems and to prevent this from prejudicing the insulation of the cable.

A further important advantage of the seal of the invention consists of the ease of mounting. The elastically deformable inner tube of the insulating portion of the seal facilitates insertion. This portion works under tension during the insertion of the cable in the direction of the end of larger cross section. In the described conventional art, the insulating portions work under compression which, combined with the fact that the known seals are made from rubber, facilitates the folding back of the seal over itself and make a correct sealing of the cable in this area hard to obtain.

The invention further includes a number of preferred features that are object of the dependent claims and the utility of which will be highlighted hereinafter in the detailed description of an embodiment of the invention.

In a preferred embodiment, the object of which is to optimize the insulation, the insulating portion of said inner tube is cylindrical, which forces the use of cables having a cylindrical cross section and prevents incorrect mounting of the cable due to rotation of the cable about its axis.

In another embodiment having the object of improving the reliability of the insulation, the intention is that the cut has absolutely no relationship with the insulating function. To this end, the inner tube preferably comprises a frustroconical section narrowing in the direction from said first end to said second end and connecting said cutting portion with said insulating portion. This embodiment affords also the synergetic effect which facilitates the insertion of the cable, since the frustroconical section assumes the function of insertion guide. On the other hand, the portion for insulation can be optimized more and adapted to the corresponding insulation needs. Thereby, if a very large insulation length is not needed, it also reduces the force required to insert the cable.

Also, to avoid errors in the cutting procedure of the unrequired insulating bodies, each of said cutting portions comprises a perimetric groove or a visual indicative mark extending at least along a part of the external perimeter of each of the corresponding insulation bodies.

With the object of extending the range of cables that may be mounted in the seal, the elastically deformable material is preferably an elastomeric material. Thus, different multiple conductor cable cross sections can be mounted in one same insulating portion. These cable cross sections will be within a range which is normally limited by the cross sections which can be mounted in the insulating bodies of the seal directly adjacent the insulating body in question. In addition, the flexibility of the elastomeric material also affords the advantage that a cable eccentric relative to the axis of the seal may be mounted without losing the insulating properties.

Particularly preferably, the seal of the invention is made entirely as an integral part. Thus, unnecessary points of ingress of humidity are reduced or avoided and the water-tightness of the assembly is improved.

In another embodiment, the seal is rotationally symmetrical about said longitudinal axis to facilitate mounting independently of the relative positions of the cable and the seal.

Alternatively, said first end is closed and must be opened prior to inserting a cable. Thus, the seal may also serve as a sealing plug in terminal connections.

In an alternative embodiment, the object of which is to facilitate the checking of already mounted electrical installations, at least one of said insulating bodies has an identification portion configured to receive a ring identifying the cable mounted in said seal.

The invention also addresses the problem of achieving a rapid mounting of electrical wiring directly on the installation site using the smallest possible amount of material and tools. To this end, the invention proposes an insulating arrangement having the features indicated at the beginning, characterized in that said at least one passage hole has receiving means for insulatedly receiving a second end of a seal according to the invention. Preferably, the coupling arrangement is an assembly kit comprising a splicing or terminal electrical connector and one or several seals according to the invention which are supplied in a container, such as for example a bag, box or the like. Also, particularly preferably it is an electrical connector for underground networks.

To speed up as far as possible the insulating mounting of the conductor cable, in a preferred embodiment, said seal has at said second end a front recess and said receiving means are a tubular projection projecting from said insulating surface, said arrangement also having retaining means, such that said recess and said tubular projection are configured to couple up with one another forming an insulating mounting through said retaining means. By simply pressing the seal over the tubular projection a sealed mounting is achieved.

In another embodiment of the arrangement, the object of which is to avoid the need of assembly tools, the retaining means are teeth provided on the mutual contact surface of at least one of said recess and/or said tubular projection.

Likewise, the invention also includes other features of detail illustrated in the detailed description of an embodiment of the invention and in the accompanying figures.

### Brief description of the drawings

Further advantages and features of the invention will become apparent from the following description, in which, without any limiting character, preferred embodiments of the invention are disclosed, with reference to the accompanying drawings in which:
Figure 1 is a front view of a first embodiment of a tubular seal according to the invention, for insulating conductor cables.
Figure 2 is a longitudinal cross section view of the seal of Figure 1, along the central plane thereof.
Figure 3 is a front view of a first embodiment of an insulating arrangement according to the invention and, in particular a connector, with various tubular insulating seals.
Figure 4 is a longitudinal cross section view of the arrangement of Figure 3, along the plane IV-IV.
Figure 5 is a longitudinal cross section view of the arrangement of Figure 3, along the plane V-V.
Figure 6 is a longitudinal cross section view along the central plane thereof, of a second embodiment of the tubular insulating seal according to the invention.
Figure 7 is a perspective view of a second embodiment of an insulating arrangement according to the invention with various insulating seals.
Figure 8 is a longitudinal cross section view along one of the central connection planes of the insulating arrangement of Figure 7.

### Detailed description of embodiments of the invention

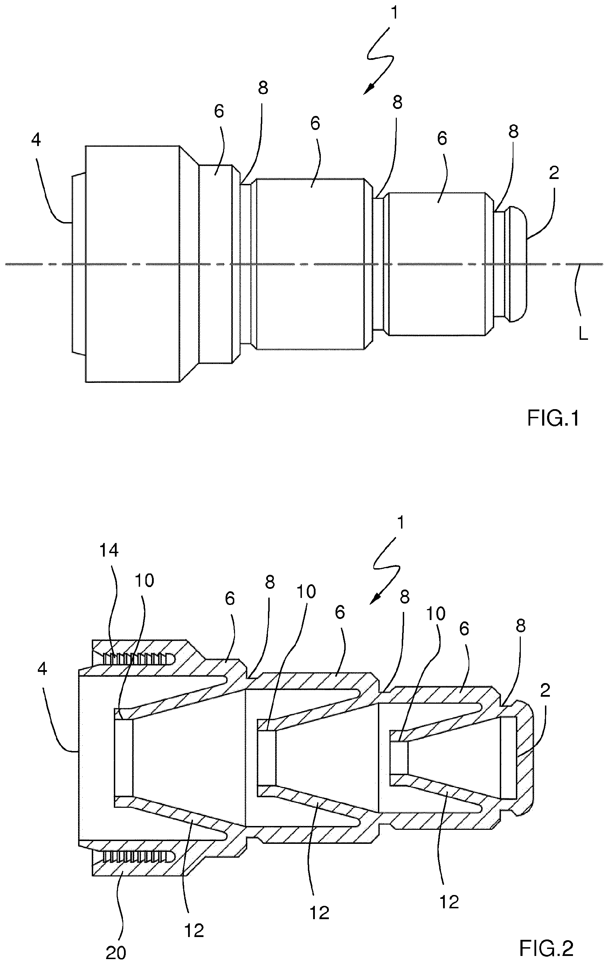

Figures 1 and 2 show a first embodiment of a tubular insulating seal 1 for insulating the connection end of electric conductor cables 102 of different cross sections. Seals of this type have various applications in the electrical field, such as for example, in low and medium voltage networks, for making splicing or terminal connections. These seals 1 provide a special aid for insulating conductor cables in underground distribution networks.

The seal 1 extends along a longitudinal direction L between a first end 2 and a second end 4. The cable 102 is inserted at the first end 2, while this comes out of the second end 4. The insulating seal 1 serves for the watertight mounting of the seal 1 on the surface where the electrical connection is made, such as for example, a cabinet, a connection box, a connector or the others.

To allow the mounting of different cable cross sections, the seal 1 is formed from a plurality of insulating bodies 6 which in this case have a circular cross section. While the circular form is particularly appropriate for this type of insulating devices, the insulating bodies 6 could have other cross sections, such as polygonal, elliptical or others. In this case, the seal of Figures 1 and 2 has three insulating bodies 6 arranged in series, one after the other. Preferably, the seal 1 is rotationally symmetrical about said longitudinal axis L. Alternatively, the insulation bodies 6 could be arranged about the longitudinal axis L, one after the other, but in such a way that an asymmetrical seal were obtained.

In the figure, it is also to be seen that the insulating bodies 6 are in an ordered fashion to receive increasing cable 102 cross sections in the direction from the first end 2 to the second end 4.

Each of the insulating bodies 6 has an insulating portion 10 to insulatingly receive a cross section of cable 102 and, in particular, the insulating covering of the conductor cable 102. Each of the insulating portions 10 is a cylindrical tube of elastically deformable material extending internally through the corresponding insulating body 6 in the direction from the first end 2 to the second end 4. In addition, the tube is separated from the corresponding outer wall of the insulating body 6, which provides flexibility for facilitating the mounting and, as will be seen later hereinafter, for making eccentric mountings.

Furthermore, in this embodiment, the inner tube of elastically deformable material does not configure the entire insulating portion, but is provided furthermore with a frustroconical section 12 narrowing in the direction of insertion of the cable 102, namely, the direction from the first end 2 to the second end 4. This frustroconical section 12 connects the cutting portion 8 with the insulating portion 10. As will be explained in detail hereinafter, this removes the risk of damage in the insulating portion 10 when the part of the seal 1 not necessary for insulating the conductor cable 102 is cut away.

Between adjacent insulating bodies 6, there are provided cutting portions 8 along which the insulating bodies 6 should be separated prior to mounting. In this embodiment, these cutting portions 8 consist of wedge-shaped grooves, around the entire perimeter of the base of each insulating body 6. Alternatively, these cutting portions 8 could be marked by visual markings extending along a part or the entire outer perimeter of each of the corresponding insulating bodies 6.

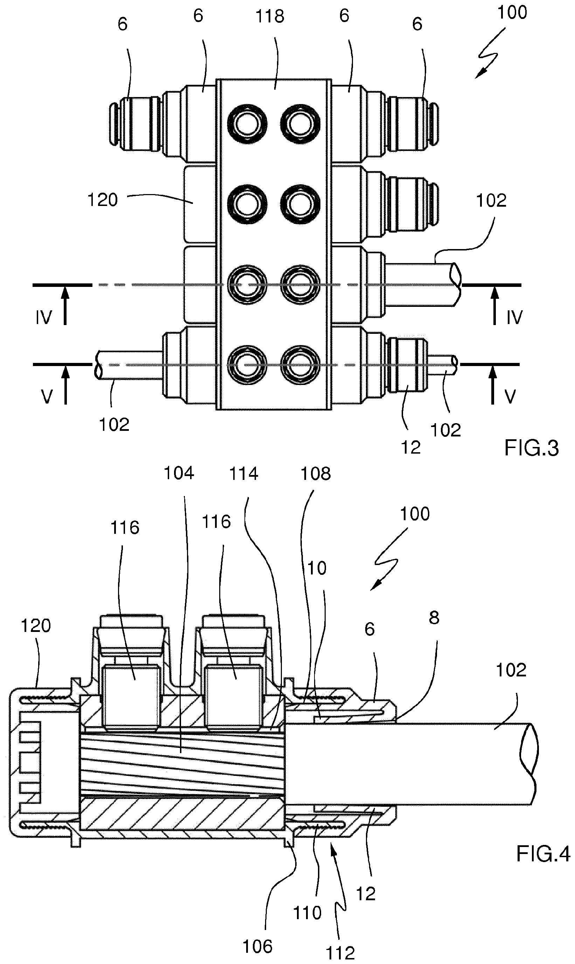

In spite of the seal 1 of Figures 1 and 2 not including it, particularly preferably, one or all of the insulating bodies 6 could have an identification portion 18 in which an identification ring 16 identifying the cable 102 could be mounted. For example, if so desired, in a three-phase electric power system, the cable phase could be identified. This ring 16 may be placed, for example, on the smallest cross section insulating body, as shown, for example, in Figure 4. In this case, the identification portion 18 consists of an annular recess in the perimeter of the insulating body 6. Owing to the steps formed by the recess, the ring 16 can be retained in the mounted position along the longitudinal direction L. The ring 16 may also be completely closed or have a mounting slot. Owing to the slot, the ring 16 can be opened to fit it to the corresponding identification portion 18.

The seal 1 of Figures 1 and 2 is made as an integral part, to facilitate manufacture and subsequent mounting. In addition, the fact that it is an integral part also avoids the appearance of not absolutely necessary points through which moisture and water could enter. Consequently, the insulating capacity of the seal 1 is even more enhanced, since the only two areas where the moisture could potentially enter are the first and second ends 2 and 4. Nevertheless, the invention does not discard that the device may possibly be formed by more than one part.

Hereinafter there is explained the mounting of a seal 1 according to the invention on the basis of insulating arrangements 100 such as those shown in Figures 3 to 5. The illustrative insulating arrangement 100 of the invention consists of a multiple connector 118 allowing splicing connections or, in case of need, terminal connections of conductor cables 102 to be made.

To this end, the connector 118 of this embodiment has eight possible passage holes 108 for cables 102 for making connections. Insulating surfaces 106 are provided. relative to which the seal 1 must achieve the water-tightness and insulation of the corresponding cable 102.

The connector 118 is also provided with connection housings 114 to receive the free end 104 of the corresponding cable 102 to be connected. In addition, there are provided in the connection housings 114 tightening means 116 to hold the free end 104 of the cables 102 and guarantee a good electrical connection. The tightening means 116 are screws having a tightening torque control system. For example, this torque control system may be a predetermined breaking groove around the perimeter of the screw head. In this embodiment, the arrangement is shown already tightened. Therefore, the screw head is no longer to be seen. The tightening means 116 could be other systems, such as for example pins with front end teeth which would bite into the conductor of the cable 102.

Each of the passage holes 108 has receiving means 110 for insulatedly receiving the second end 4 of the corresponding insulating seals 1. To guarantee the holding, each seal 1 has at the second end 4 thereof a front recess 14 which is a cylindrical hollow. In turn, the connector receiving means 110 are a cylindrically shaped tubular projection extending from the insulating surface 106 of the connector 118 and which corresponds with the recess 14. As may be seen in the figures, the front recess 14 forms an outer skirt 20 providing improved insulation, since the moisture has to cover a long path to reach the inside of the arrangement 100.

To carry out the mounting of the arrangement of Figure 4, in the first place there is determined the cross section of the cable 102 that is to be mounted. In the case of Figure 4, starting out from a seal 1 similar to that of Figures 1 and 2, it is seen that the cable 102 to be mounted corresponds to the diameter of the insulating portion 10 of the largest diameter insulating body, namely, the insulating body 6 at the left in Figures 1 and 2. Thus, with a cutting member, for example a sharp blade, or an electrician's knife, the seal 1 is cut at the cutting portion 8 provided between the first and second insulating bodies 6 from the left in Figures 1 and 2. Thus the two insulating bodies 6 for cable 102 cross sections smaller than the cross section of the cable 102 to be mounted in the seal 1 are removed. Thereafter, the free end 104 is inserted through the orifice of the inner tube, in the direction from the end which has been cut to the second end 4. Owing to the frustroconical section 12, insertion becomes very easy and requires little force, because this portion guides the free end 104. When the insulating portion 10 is reached, the cable 102 is continued to be pushed until a sufficient amount comes out through the second end 4. The tubular form of the insulating portion makes it hard for the seal 1 to fold back inwardly over itself. In a preferred embodiment, the inner tube is provided with a greater wall thickness in the cutting portion 8 to hinder the folding over of the seal 1. Alternatively, the insulating body 6 could be rigid on the outside and, on the other hand, the inner tube could be elastically deformable.

Once this first mounting has been done, the screws are loosened sufficiently to be able to insert the free end 104 of the cable 102 in the connection housing 114. When the free end 104 is under both screws, these are tightened to the desired tightening torque. Finally, with the cable 102 being correctly mounted, the seal 1 is slid along the cable 102 and the tubular projection 110 is inserted in the front recess 14 of the second end until the seal 1 abuts with the second end 4 thereof against the insulating surface 106.

The toothlike retaining means 112 provided both on the outer surface of the tubular projection 110 and on the inner surface of the recess 14 provide a solid fixing of the seal 1 in the connector 118. In addition, this arrangement 100 provides a mounting impermeable to water, moisture, dust and other agents at both ends of the seal 1.

This is a terminal connection and, therefore, the passage hole 108 facing the passage hole through which the cable 102 has been mounted must be sealed, for example, with a sealing plug 120. The seal 1 according to the invention is, in its initial state, closed at the first end 2. Therefore, alternatively, the entire seal 1 could be used to seal this passage hole 108, as shown at the top of Figure 3.

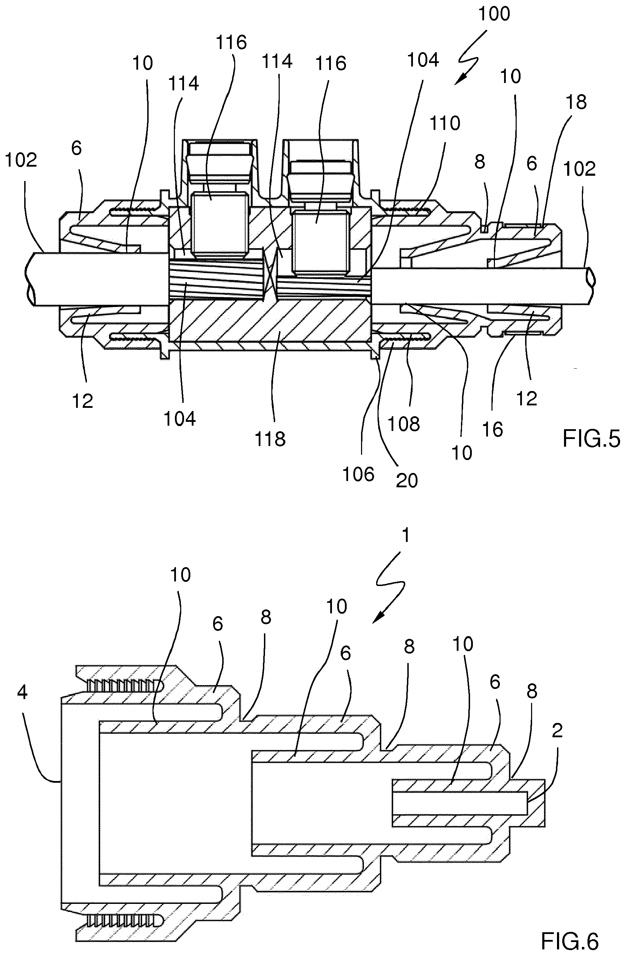

In the example of the arrangement of Figure 5, right-hand side, the seal 1 has been cut at the cutting portion 8 provided between the second and third insulating bodies 6 starting from the left of the figure. The remaining mounting is identical to that explained in the foregoing paragraphs and therefore the already explained technical features are incorporated here by reference to said paragraphs.

As may be seen, the seal 1 and the arrangement 100 according to the invention considerably simplify the insulated mounting of cables 102.

In Figure 5 it is also to be seen that the insulating seal 1 is made from an elastomeric type elastic material. Owing to this, cables 102 may be mounted offset in the housing 114 and consequently the insulating portion 10 adapts to this offset.

Hereinafter there are shown other embodiments of the seal according to the invention sharing a large part of the features described in the foregoing paragraphs. Consequently, there will be described hereinafter only the differentiating members, while for the common members reference is made to the description of the first embodiment.

The main difference of the seal according to Figure 6 consists of the insulating portions 10 extending through the inside of the corresponding insulating body 6, in the direction from the first end 2 to the second end 4, do not have a frustroconical section, but are simply a substantially straight internal cylinder. This provides two advantages. In the first place, this shape is simpler to strip from the mold when being manufactured as a single part of elastomeric material. In the second place, owing to this configuration, a longer insulating portion may be formed, which may be desirable in some applications in which great expansion may occur in the insulation portion. In these cases, an enhanced water-tightness is guaranteed.

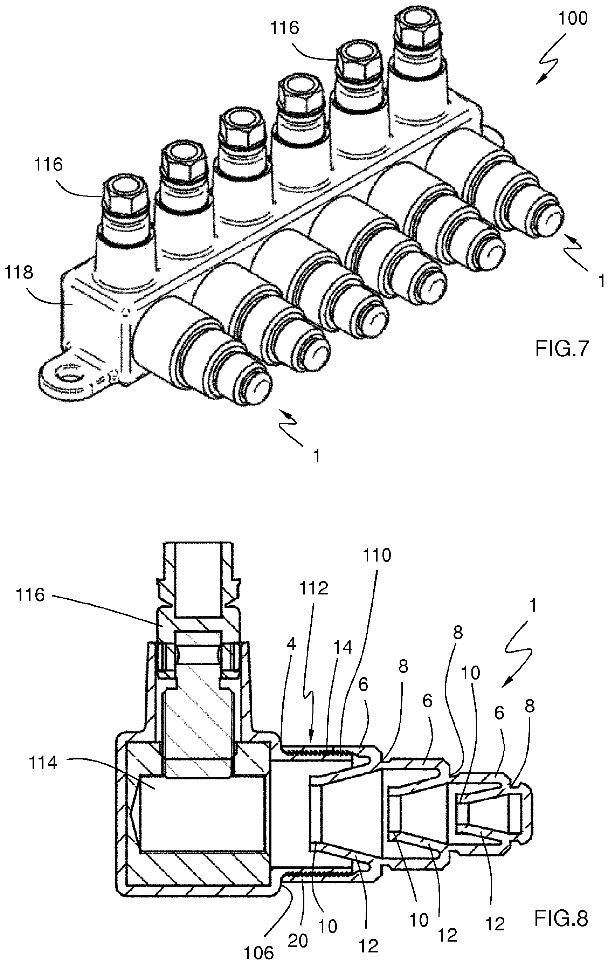

In an arrangement according to the invention, both a connector 118 and a set of eight seals 1 could be marketed as a mounting kit. This is shown in Figures 7 and 8. As may be seen, the figures show a mounting kit of a terminal connector 118 provided with six connection inlets. Obviously, the kit could be formed by a splicing connector.

In these figures, the connection kit is shown in the supply state. Thus, the connector 118 has all the screws with the entire heads, arranged for being tightened. In turn, the sealing seals 1 are also intact and closed at the first end 2. Thus, they may be used as sealing plugs.

As far as the operative principle of this terminal connection kit is concerned, it is identical to that described in the coupling arrangement of Figures 3 to 5. Consequently, there is no need to explain the details again.

The embodiments described thus far are non-limiting examples, such that a man of the art will understand that beyond the examples shown, multiple combinations between the claimed features are possible within the scope of the invention.

## Claims

1. A tubular insulating seal (1) for insulating the connection end of electric conductor cables (102) of different cross sections, said seal (1) extending along a longitudinal direction (L) between a first insertion end (2) and a second exit end (4) for said cable (102), **characterized in that** it comprises:
[a] a plurality of insulating bodies (6), each of said insulating bodies (6) comprising an insulating portion (10) for at least one cable (102) cross section,
[b] said insulating bodies (6) being arranged one after the other, in order according to increasing cable (102) cross sections in the direction from said first end (2) to said second end (4), and
[c] each of said insulating portions (10) being configured as a tube of elastically deformable material, extending internally through the corresponding insulating body (6), in the direction from said first end (2) to said second end (4), and **in that**
[d] between adjacent insulating bodies (6) there are provided cutting portions (8) along which the insulating bodies (6) for the insulated mounting of said cable (102) must be separated from the insulating bodies for cable (102) cross sections smaller than the cross section of the cable (102) that is to be mounted in said seal (1).

2. A seal (1) according to claim 1, **characterized in that** said insulating portion (10) of said inner tube is cylindrical.

3. A seal (1) according to claim 2, **characterized in that** said inner tube preferably comprises a frustroconical section (12) narrowing in the direction from said first end (2) to said second end (4) and connecting said cutting portion (8) with said insulating portion (10).

4. A seal (1) according to any one of claims 1 to 3, **characterized in that** each of said cutting portions (8) comprises a perimetric groove or a visual indicative mark extending at least along a part of the external perimeter of each of the corresponding insulation bodies (6).

5. A seal (1) according to claim 1 or 4, **characterized in that** said elastically deformable material is an elastomeric material.

6. A seal (1) according to any one of claims 1 to 5, **characterized in that** it is made entirely as an integral part.

7. A seal (1) according to any one of claims 1 to 6, **characterized in that** it is rotationally symmetrical about said longitudinal axis (L)

8. A seal (1) according to any one of claims 1 to 7, **characterized in that** said first end (2) is closed and must be opened prior to inserting a cable (102).

9. A seal (1) according to any one of claims 1 to 8, **characterized in that** at least one of said insulating bodies (6) has an identification portion (18) configured to receive a ring (16) identifying the cable (102) mounted in said seal (1).

10. An insulating arrangement for insulating at least one electric conductor cable (102), said arrangement (100) comprising an insulating surface (106) with at least one passage hole (108) for the insertion of said cable (102), **characterized in that** said at least one passage hole (108) has receiving means (110) for insulatedly receiving a second end (4) of a seal (1) according to any one of claims 1 to 9.

11. An arrangement according to claim 10, **characterized in that** said seal (1) has at said second end (4) a front recess (14) and said receiving means (110) are a tubular projection (110) projecting from said insulating surface (106), said arrangement (100) also having retaining means (112), such that said recess (14) and said tubular projection (110) are configured to couple up with one another forming an insulating mounting through said retaining means (112).

12. An arrangement according to claim 11, **characterized in that** said retaining means (112) are teeth provided on the mutual contact surface of at least one of said recess (14) and/or said tubular projection (110).
